Europäisches Patentamt

European Patent Office

Office européen des brevets

(11) Veröffentlichungsnummer: **0 365 709**
**A1**

## (12) EUROPÄISCHE PATENTANMELDUNG

(21) Anmeldenummer: 88117986.5

(51) Int. Cl.⁵: **A47B 47/00**

(22) Anmeldetag: 28.10.88

(43) Veröffentlichungstag der Anmeldung:
**02.05.90 Patentblatt 90/18**

(84) Benannte Vertragsstaaten:
**AT BE CH DE ES FR GB GR IT LI LU NL SE**

(71) Anmelder: **KRONOSPAN ANSTALT**

**FL-9490 Vaduz(LI)**

(72) Erfinder: **Davies, Oliver**
**c/o Kronospan GmbH Postfach 210**
**D-4939 Steinheim 2(DE)**

(74) Vertreter: **Türk, Gille, Hrabal**
**Brucknerstrasse 20**
**D-4000 Düsseldorf 13(DE)**

(54) Beschlag für aus plattenförmigen Elementen zusammensetzbare Möbel.

(57) Es ist ein Beschlag (5) für aus plattenförmigen Elementen (1, 2) zusammensetzbare und zerlegbare Möbel wie Regale offenbart, der aus zwei formschlüssig miteinander zu verbindenden, zumindest teilweise schienenförmig ausgebildeten und in Längsrichtung ineinander schiebbaren Teilen (6, 7) besteht, die an jeweils einem der beiden miteinander zu verbindenden Elemente (1, 2) des Möbels zu befestigen sind. An einem der beiden Teile (7) ist ein Anschlag (12) angeordnet, der die Einschubtiefe dieses Teiles (7) in das andere Teil (6) begrenzt und außerdem so konturiert ist, daß er sich der Form der Vorderkante des Gegenelementes des Möbels anpaßt und somit die Verbindungsstelle formschön kaschiert.

FIG.1

## Beschlag für aus plattenförmigen Elementen zusammensetzbare Möbel

Die Erfindung betrifft einen Beschlag für aus plattenförmigen Elementen zusammensetzbare Möbel. Beispielsweise ist der Beschlag für Regale bestimmt, jedoch ist er ebenso für andere Möbel wie beispielsweise Tische geeignet, bei denen plattenförmigen Element rechtwinklig aufeinanderstoßend aneinander zu befestigen sind.

Es ist bekannt, bei aus plattenförmigen Elementen zusammensetzbaren Regalen die als Auflageelemente dienenden, im Querschnitt rechteckigen horizontalen Bretter auf Sockel aufzulegen, die an senkrecht verlaufenden Wänden angeordnet sind, beispielsweise in vorbereitete Löcher in den senkrechten Wänden eingesteckt werden. Diese Art der Verbindung zwischen den horizontalen Platten und den senkrechten Wänden sorgt zwar im allgemeinen für eine sichere Auflage der horizontalen Bretter und damit eine Abstützung derselben in senkrechter Richtung, nicht hingegen für eine seitliche Stabilität des Regales. Daher müssen die als Stützen dienenden senkrechten Wände über horizontale Querverbindungen untereinander zu einem formstabilen Rahmen verbunden werden. Derartige Rahmen sind nicht nur kostspielig in der Herstellung, sondern auch sperrig und eignen sich nicht für eine raumsparende Lagerung und Verpackung. Werden die plattenförmigen Teile eines derartigen Regalrahmens voneinander getrennt verpackt und geliefert, müssen sie zunächst einmal zu dem rechteckigen Rahmen aufgebaut und über Stife, Dübel od.dgl. verbunden werden, bevor man die als Auflagen dienenden horizontalen Bretter, welche zur Stabilität des Rahmens nichts beitragen, auf die in die senkrechten Wände eingesteckten Sockel auflegen kann.

Der Erfindung liegt die Aufgabe zugrunde, einen Beschlag für aus plattenförmigen Elementen oder Teilen zusammensetzbare Möbel zu schaffen, der es einerseits ermöglicht, daß alle zusammengesetzten Elemente oder Teile der Möbel zu deren Stabilität beitragen, und der außerdem ein gefälliges Aussehen der zusammengesetzten Möbel-Elemente oder -Teile vermittelt.

Zur Lösung dieser Aufgabe wird erfindungsgemäß ein Beschlag für aus plattenförmigen Elementen zusammensetzbare Möbel wie Regale vorgeschlagen, der aus zwei ineinander steckbaren und rechtwinklig zueinander arretierbaren bzw. verriegelbaren Teilen besteht, wobei jedes der beiden Teile jeweils an einem von zwei der Elemente der Möbel zu befestigen ist.

Mit anderen Worten wird gemäß der Erfindung ein Beschlag für rechtwinklig zueinander anzuordnende und aneinander zu befestigende plattenförmige Elemente von Möbeln vorgeschlagen, der zwar ein einfaches Zusammenstecken der einzelnen Elemente oder Teile der Möbel ermöglicht, andererseits aber verhindert, daß diese rechtwinklig zueinander auseinandergezogen und damit voneinander gelöst werden können. Daher ist bei einfacher Montage derartiger Möbel aus plattenförmigen Elementen oder Teilen eine stabile Konstruktion der Möbel möglich, weil alle mit einem derartigen Beschlag zusammengebauten Teile nicht nur miteinander verbunden sind, sondern auch zur Stabilität der gesamten Konstruktion beitragen. Das ist nicht nur bei Regalen mit zwischen senkrechten Wänden horizontal angeordneten Platten der Fall, sondern beispielsweise auch bei aus plattenförmigen Elementen zusammensetzbaren Tischen, Sitzgelegenheiten, Kästen u.dgl.. Daher ist der erfindungsgemäße Beschlag besonders für auch von Laien zusammenbaubare oder zerlegbare, aus plattenförmigen Grundkörpern aufzubauende Möbel geeignet. Hinzu kommt, daß der Beschlag so ausgebildet sein kann, daß er nach außen ein gefälliges Äußeres vermittelt.

Vorzugsweise sind die beiden Teile des Beschlages formschlüssig ineinandersteckbar ausgebildet, beispielsweise schienenförmig, und mit Hinterschneidungen in Längsrichtung zusammenpassend oder ineinanderpassend versehen. Besonders bevorzugt sind die beiden Teile des Beschlages mit einer Schwalbenschwanzführung ausgestattet und so zusammensetzbar. Die Führung hat vorzugsweise ein enges Spiel, so daß eine feste formschlüssige Verbindung durch das Zusammenstecken und -schieben der beiden Teile hergestellt wird.

Nach einem weiteren bevorzugten Merkmal der Erfindung ist an einem Ende des einen Teiles des Beschlages ein Anschlag angeordnet, der einerseits die Einschiebtiefe dieses Beschlagteiles in den anderen begrenzt und andererseits geeignet ist, eine Anpassung an die Vorderkanten der zusammenzubauenden plattenförmigen Möbel-Teile oder -Elemente zu bewirken. Das ist besonders dann von Interesse, wenn die Vorderkanten der zusammenzubauenden plattenförmigen Möbel-Teile nicht rechteckig ausgebildet sind, sondern beispielsweise abgerundet.

Für den letztgenannten Fall ist nach einem weiteren Merkmal der Erfindung der Anschlag ein über das betreffende Teil des Anschlages überstehender konturierter Ansatz, der sich der Form der Vorderkante des entsprechenden anderen Möbelelementes anpassend geformt ist. Beispielsweise weist der Anschlag eine Seite mit bogenförmiger Kontur auf. In diesem Falle kann er sich einer abgerundeten Vorderkante eines entsprechenden Gegenstückes eines Möbels anpassen. Das ist deshalb von besonderem Interesse, weil nach neueren Erkenntnissen Vorderkanten von plattenförmigen Möbel-Teilen wie senkrechten Wänden und horizontalen Platten eines Regales oder auch von Schränken, Kästen, Türen usw. nicht gradlinig und senkrecht ausgebildet sein sollten, damit die Beschichtung der Vorderwände nicht aufgrund verschiedenartigster Einflüsse verhältnismäßig schnell und leicht abblättert bzw. sich von der Unterlage ablöst.

Nach einem weiteren Merkmal der Erfindung ist der eine der beiden schienenförmigen Teile des Beschlages auf der der Führung bzw. dem Führungsabschnitt entgegengesetzten Seite im Querschnitt U-förmig ausgebildet, wobei die beiden senkrecht verlaufenden Schenkel der U-Form in einem derartigen Abstand voneinander stehen, daß das plattenförmige Element, an welchem dieser Teil des Beschlages befestigt werden soll, zwischen diese beiden Schenkel paßt. Dadurch wird einerseits eine feste und stabile Verbindung zwischen dem Beschlagteil und dem betreffenden plattenförmigen Element hergestellt und andererseits die im allgemeinen abgesägte Kante des betreffenden plattenförmigen Elementes abgedeckt. Dadurch kann man an der Schnittkante ausgebrochene Stellen im Furnier, die der Fachmann auch " Mäusezähne " nennt, kaschieren bzw. nach außen unsichtbar machen. Somit trägt auch dieses Merkmal der Erfindung dazu bei, ein gefälliges Aussehen zu vermitteln.

In der Zeichnung ist ein Ausführungsbeispiel eines erfindungsgemäßen Beschlages dargestellt, und zwar zeigt

Figur 1 eine schaubildliche Teilansicht eines aus senkrechten Wänden und horizontal dazwischen angeordneten Platten zusammengebauten Regales in einem Bereich, in welchem eine horizontale Platte mittels eines erfindungsgemäßen Beschlages an einer senkrechten Wand befestigt ist,

Figur 2 einen Teilschnitt nach Linie II-II durch den zusammengebauten Beschlag und die plattenförmigen Elemente des Regales, an denen die Beschlagteile befestigt sind, und

Figur 3 eine Seitenansicht des Kopfendes des einen Beschlagteiles, woraus zu erkennen ist, daß dieses Teil der abgerundeten Vorderkante der senkrechten Regalwand angepaßt konturiert ist.

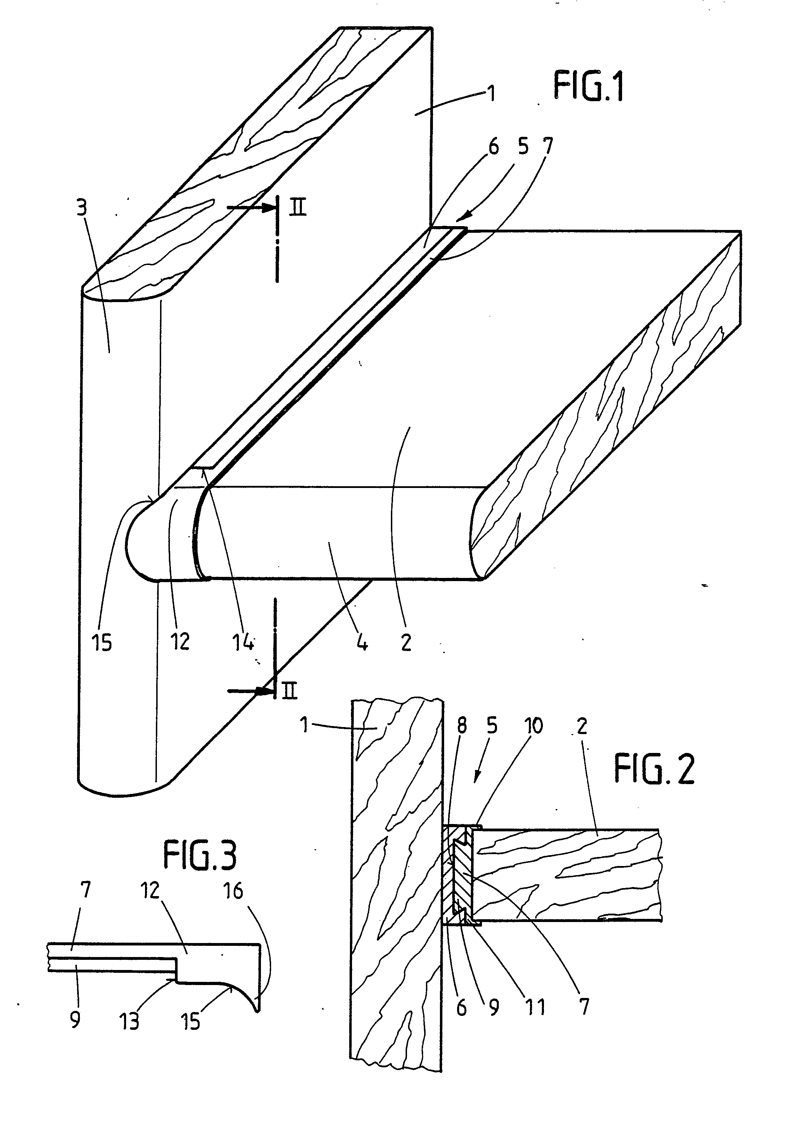

Von einem aus plattenförmigen Elementen aufgebauten Regal ist in Figur 1 nur ein Teil einer senkrechten Wand (1) und ein Teil eines horizontal angeordneten Auflagebrettes (2) im Bereich einer Verbindungsstelle dargestellt. Sowohl die Wand (1) als auch das Auflagebrett (2) haben jeweils eine abgerundete Vorderkante (3) bzw. (4).

Das Auflagebrett (2) ist an der senkrechten Wand (1) mittels eines Beschlages (5) lösbar befestigt. Der Beschlag (5) besteht aus zwei Teilen (6 und 7), die beispielsweise aus Metall hergestellt sind und mittels einer sich in Längsrichtung des Beschlages (5) erstreckenden schienenartigen Führung lösbar ineinandergesteckt und zusammengeschoben werden können. Zu diesem Zweck enthält das Teil (6) eine schwalbenschwanzförmig hinterschnittene, sich über dessen gesamte Länge erstreckende Ausnehmung (8) und das andere Teil (7) einen in dieser Ausnehmung passenden schwalbenschwanzförmigen Ansatz (9). Ausnehmung (8) und Ansatz (9) passen mit engem Spiel ineinander, so daß beide Teile des Beschlages (5) zwar ineinandergeschoben werden können, dabei aber eine feste und stabile Verbindung bilden.

Beide Teile (6 und 7) des Beschlages (5) sind an der Wand (1) bzw. dem Auflagebrett (2) dauerhaft befestigt, beispielsweise an diesen Elementen festgeschraubt.

Das Teil (7) ist auf seiner dem Ansatz (9) entgegengesetzten Seite U-förmig ausgebildet, wobei die seitlich hochstehenden kurzen Schenkel (10 und 11) in einem solchen Abstand voneinander angeordnet sind, daß das Auflagebrett (2) gerade dazwischen paßt und dessen dem Beschlag (5) zugewandtes Ende seitlich abgedeckt ist, um Ungenauigkeiten an der dem Beschlag zugewandten abgeschnittenen Stirnseite zu verdecken.

Das Teil (7) ist außerdem mit einem Kopfstück (12) versehen, das als Anschlag zum Begrenzen der Einschubtiefe dient und außerdem so geformt ist, daß der Beschlag (5) einen formschönen Übergang zwischen den senkrecht aufeinanderstoßenden Regalelementen, nämlich der Wand (1) und dem Auflagebrett (2), bildet. Der Kopf (12) ist mit einer rückwärtigen Schulter (13) ausgestattet, die, wie Figur 1 zeigt, sich gegen das vordere Ende (14) des etwas kürzer ausgebildeten Teiles (6) legt, wenn die beiden Teile (6 und 7) des Beschlage (5) vollständig zusammengeschoben sind. Außerdem weist der Kopf (12) an der in Figure 3 unten dargestellten Seite eine gebogene Kontur (15) auf, die, wie Figur 1 zeigt, der Rundung der Vorderkante (3) der Wand (1) angepaßt ist. Diese Kontur (15) läuft in eine vorstehende Nase (16), aus die entsprechend der Rundung der Vorderkante (4) des Auflagebrettes (2) abgerundet ist und somit einen formschönen und gefälligen Übergang zwischen den senkrecht aufeinanderstoßenden Regalteilen herstellt.

## Ansprüche

1. Beschlag (5) für aus plattenförmigen Elementen (1, 2) zusammensetzbare Möbel, beispielsweise Regale, **dadurch gekennzeichnet,** daß er aus zwei ineinandersteckbaren und rechtwinklig zueinander arretierten bzw. verriegelten Teilen (6, 7) besteht, die an jeweils einem von zwei dieser Elemente (1, 2) zu befestigen sind.

2. Beschlag nach Anspruch 1, dadurch gekennzeichnet, daß seine beiden Teile (6, 7) formschlüssig ineinandersteckbar sind.

3. Beschlag nach Anspruch 1 oder 2, dadurch gekennzeichnet, daß seine beiden Teile (6, 7) schienenförmig ausgebildet sind und mit Hinterschneidungen zusammenpassend in Längsrichtung verschiebbar ineinanderpassen.

4. Beschlag nach Anspruch 3, dadurch gekennzeichnet, daß seine beiden Teile (6, 7) nach Art einer Schwalbenschwanzführung (8, 9) ineinanderpassend ausgebildet sind.

5. Beschlag nach einem der Ansprüche 1 bis 4, dadurch gekennzeichnet, daß an einem Ende des einen Teiles (7) ein Anschlag (12) angeordnet ist.

6. Beschlag nach Anspruch 5, dadurch gekennzeichnet, daß der Anschlag (12) ein über das betreffende Teil überstehender konturierter Ansatz (14, 15, 16) ist.

7. Beschlag nach Anspruch 6, dadurch gekennzeichnet, daß der Anschlag (12) eine Seite mit bogenförmiger Kontur (15) aufweist.

8. Beschlag nach einem der Ansprüche 1 bis 7, dadurch gekennzeichnet, daß wenigstens der eine der beiden schienenförmigen Teile (7) auf der der Führung (9) entgegengesetzten Seite im Querschnitt U-förmig ausgebildet ist.

FIG.1

FIG.2

FIG.3

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | US-A-3 846 003 (THE SINGER CO.) <br> * Figur 1; Spalte 2, Zeilen 52-64 * <br> ----- | 1-3,6,7 | A 47 B 47/00 |

RECHERCHIERTE SACHGEBIETE (Int. Cl.5)

A 47 B

Der vorliegende Recherchenbericht wurde für alle Patentansprüche erstellt

| Recherchenort | Abschlußdatum der Recherche | Prüfer |
|---|---|---|
| DEN HAAG | 10-07-1989 | NOESEN R.F. |